# EUROPEAN PATENT APPLICATION

(11) **EP 2 939 885 A1**
(43) Date of publication of application: **04.11.2015**
(21) Application number: 14746000.0
(22) Date of filing: 27.01.2014
(51) Int. Cl.: B60R 16/02, B60K 35/00, G06F 3/01

(54) **ELECTRONIC CONTROL DEVICE**

(30) Priority: 29.01.2013 JP 2013013973
(71) Applicant: Yazaki Corporation, Minato-ku Tokyo 108-8333 (JP)
(72) Inventor: MIZUNO Yoshiyuki, Makinohara-shi Shizuoka 421-0492 (JP)
(74) Representative: Brevalex
(86) International application number: PCT/JP2014/051707
(87) International publication number: WO 2014/119521

(57) **Abstract**

A recognition sensor (2) for detecting motion of a hand or a finger is provided at the tip of a lever switch (6). When an abnormality occurs, a control unit (5) controls a display unit (3) and a speaker (4) so as to execute an alarm function, there by generating alarm from the display unit (3) and the speaker (4). When the swinging motion of the finger is detected by the recognition sensor (2) during the execution of the alarm function, the control unit (5) stops the alarm function of the display unit (3) and the speaker (4).

## Description

### Technical Field

The present invention relates to electronic control apparatuses, and in particular to an electronic control apparatus for controlling electronic devices mounted on a vehicle.

### Background Art

In recent years, an automobile mounts therein many electronic devices such as an audio device, a TV, a video device and a mobile phone as well as a car navigation system. According to this tendency, the number of operations of the electronic devices to be performed by a driver has been increased remarkably. However, operations such as pressing of buttons and rotation of knobs interfere the driving operation. In view of this, technique has been proposed in which an optical switch or the like for detecting the motion of a hand is provided in order to facilitate the operation during the driving, thereby performing the operation according to the movement of a hand or a finger (patent literatures 1 to 4).

### Citation List

### Patent Literature

Patent Literature 1: JP-A-2001-216069
Patent Literature 2: JP-A-H11-44703
Patent Literature 3: JP-A-2005-47329
Patent Literature 4: JP-A-H10-148640

### Summary of Invention

### Technical Problem

In particular, the patent literature 3 discloses an input device for a vehicle in which a camera is provided at the tip of a lever switch attached to a steering column so that the camera detects the shape and the motion of a hand. This technique of performing operations according to the hand or finger motion using the camera has the following problem. That is, for example, when a driver moves the hand unintentionally, such the motion of the hand is detected and erroneously determined as an operation to be performed. In this manner, malfunctions occur frequently.

In order to prevent the malfunction, the input device for a vehicle according to the patent literature 3 is configured in a manner that a camera is provided at the tip of each of right and left lever switches, and determination is made that there is an operation to be performed only when the shape or the motion of the hand is detected by both the cameras. However in this case, a driver is required to move both the hands with respect to both the cameras, and hence there arises a problem that the operation cannot be performed simply.

The invention is made in consideration of the aforesaid circumstances and an object of the invention is to provide an electronic control apparatus which can reduce the occurrence of malfunction in an operation performed by the swinging motion of a hand or a finger.

### Solution to Problems

In order to solve the aforesaid problem, one mode of the invention provides an electronic control apparatus that includes: a motion detection unit that detects motion of a hand or a finger; and a control unit that controls at least one electronic device, wherein the control unit stops execution of a specific function by the electronic device when the motion detection unit detects the motion while the electronic device executes the specific function.

According to another mode of the invention, the specific function is an alarm function or a notification function, and the control unit stops execution of the alarm function or the notification function by the electronic device when the motion detection unit detects the motion while the electronic device executes the alarm function or the notification function.

According to still another mode of the invention, the specific function is a lighting function that an indoor illumination lamp constituting the electronic device is lit with an alarm color, and the control unit stops lighting of the indoor illumination lamp with the alarm color when the motion detection unit detects the motion while the indoor illumination lamp is lit with the alarm color.

According to still another mode of the invention, the specific function is a display function that a head-up display constituting the electronic device performs a display operation, and the control unit stops the display operation of the head-up display when the motion detection unit detects the motion while the head-up display performs the display operation.

According to still another mode of the invention, the control unit stops the display operation of the head-up display and displays, on another display unit other than the head-up display, display contents having been displayed on the head-up display.

According to still another mode of the invention, the motion detection unit is provided at the tip of a lever switch attached to a steering column.

According to the one mode of the invention, no response is performed with respect to the motion of the hand or the finger while the electronic device does not operate based on the specific function, and hence an erroneous operation can be prevented.

According to the another mode of the invention, even when the hand or the finger is moved in the vicinity of the motion detection unit while the alarm function or the notification function is not performed, the motion is not recognized as an operation, and hence an erroneous operation can be prevented.

According to the still another mode of the invention, even when the hand or the finger is moved in the vicinity of the motion detection unit while the head-up display stops the display operation, the motion is not recognized as an operation, and hence an erroneous operation can be prevented.

According to the still another mode of the invention, the motion detection means is provided at the tip of the lever switch attached to the steering column. Thus, the operation can be performed without leaving the fingers from the steering. Advantageous Effects of Invention

According to the invention, even when the hand or the finger is moved in the vicinity of the motion detection unit while the electronic device does not execute the specific function, the motion is not recognized as an operation, and hence an erroneous operation can be prevented.

### Brief Description of Drawings

[Fig. 1] Fig. 1 is a diagram showing an electronic control apparatus according to a first embodiment and a second embodiment of the invention.
[Fig. 2] Fig. 2 is a side view of a peripheral portion of a steering shown in Fig. 1.
[Fig. 3] Fig. 3 is an enlarged diagram of a lever switch shown in Fig. 1.
[Fig. 4] Fig. 4 is an enlarged diagram showing positional relation between the steering and the lever switch shown in Fig. 1.
[Fig. 5] Fig. 5 is a flowchart showing the processing procedure of a control unit shown in Fig. 1, according to the first embodiment.
[Fig. 6] Fig. 6 is a flowchart showing the processing procedure of the control unit shown in Fig. 1, according to the second embodiment.
[Fig. 7] Fig. 7 is a flowchart showing the processing procedure of the control unit shown in Fig. 1, according to a third embodiment.
[Fig. 8] Fig. 8 is a diagram showing an electronic control apparatus according to the third embodiment of the invention.
[Fig. 9] Fig. 9 is a flowchart showing the processing procedure of a control unit shown in Fig. 7, according to the third embodiment.

### Description of Embodiments

### [First Embodiment]

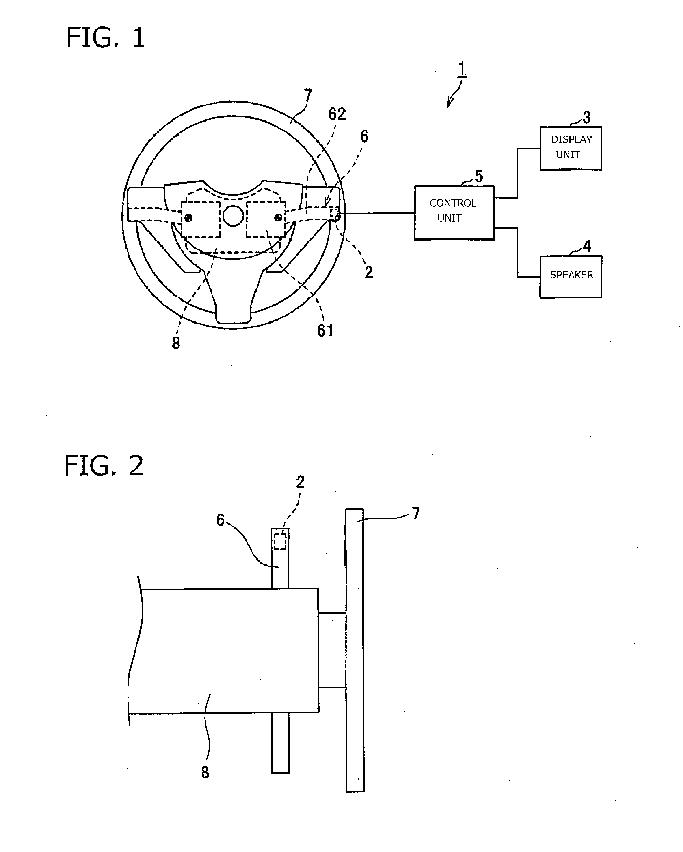

Hereinafter, an embodiment of an electronic control apparatus according to the invention will be explained based on Figs. 1 and 2. As shown in these figures, an electronic control apparatus 1 includes a sensor 2 for recognizing simple gestures (hereinafter abbreviated as "recognition sensor 2") as a motion detecting unit for detecting the motion of a finger and a control unit 5 for controlling a display unit 3 and a speaker 4. The electronic control apparatus 1 further includes the display unit 3 and the speaker 4 each as an electronic device. Although the minimum configuration of the electronic control apparatus 1 is the recognition sensor 2 and the control unit 5, this embodiment will be explained as to a mode in which the control unit 5 is connected to the display unit 3 and the speaker 4 as the electronic devices.

The recognition sensor 2 is configured by an electrostatic sensor or a camera and can detect the vertical swinging motion of a finger. As shown in Fig. 2 etc., the recognition sensor 2 is attached to the tip of a lever switch 6 such as a turn signal lever or a wiper lever. The lever switches 6 are provided so as to protrude respectively from the side surfaces of a steering column 8 acting as the rotation shaft of a steering 7.

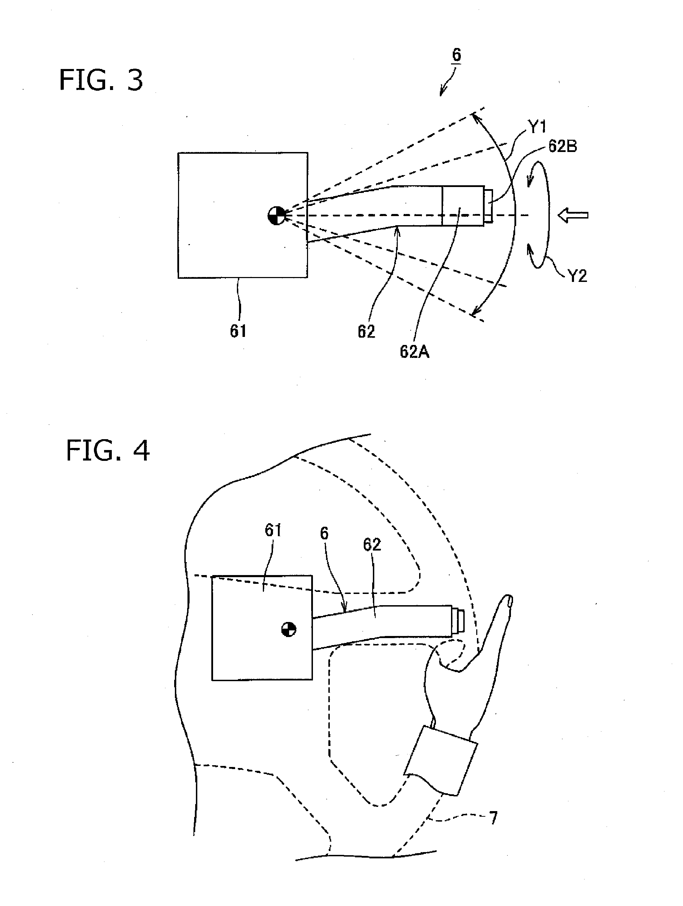

As shown in Fig. 3, the lever switch 6 has a base 61 and a lever body 62 which one end is attached to the base 61. In general, the lever switch 6 is configured to be able to perform, for example, an operation of tilting the lever body 62 vertically or laterally around the base 61 as a fulcrum as shown by an arrow Y1, an operation of rotating a nob 62A attached to the lever body 62 around the axis of the lever boy 62 as shown by an arrow Y2, and an operation of pushing a button 62B provided at the tip of the lever body 62.

As shown in Fig. 4, the tip of the lever switch 6 is provided in the vicinity of the outer periphery of the steering 7. Thus, other fingers can be moved at the tip of the lever switch 6 while hooking the thumb on the steering 7. Accordingly, the fingers can be moved at the tip of the lever switch 6 in the substantially same situation as that where the steering 7 is grasped.

The display unit 3 is a display such as a liquid crystal display provided on the instrument panel etc. of a vehicle and displays various kinds of information of the vehicle thereon. The speaker 4 generates alarm sound, for example. The control unit 5 is configured by a microcomputer, for example. The control unit 5 is connected to the display unit 3 and the speaker 4 to thereby control the operations of the display unit 3 and the speaker 4. If an abnormality such as disconnection of a head lamp or a rear lamp occurs, the control unit 5 operates the display unit 3 and the speaker 4 based on an alarm function, thereby displaying the occurrence on the display unit 3 and generating alarm sound from the speaker 4, for example.

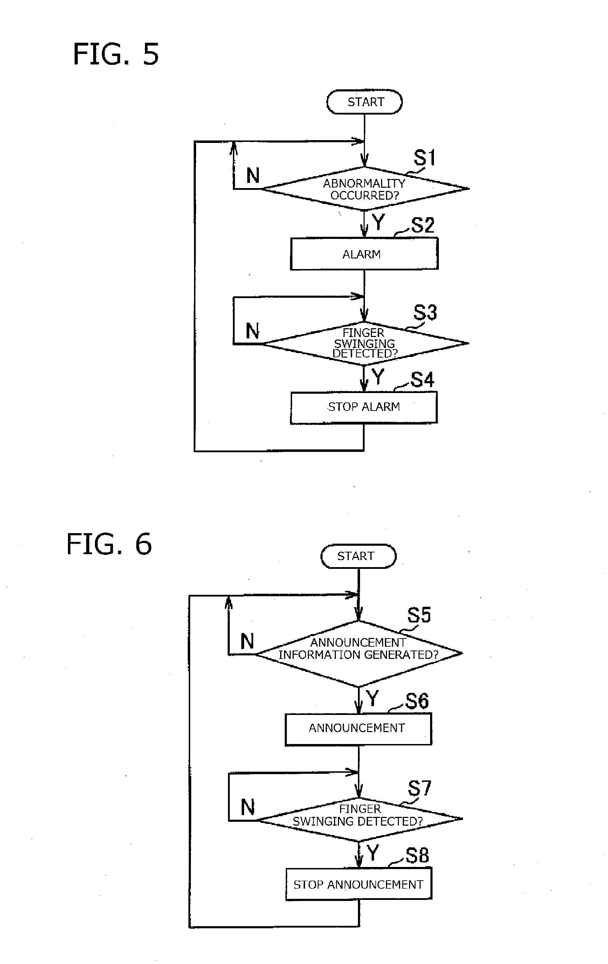

Next, the operation of the electronic control apparatus 1 will be explained with reference to Fig. 5. First, the control unit 5 starts a processing in response to the turning-on of an ignition switch. When the occurrence of abnormality is detected (Y in step S1), the control unit controls the display unit 3 and the speaker 4 to execute the alarm function, thereby displaying the alarm on the display unit 3 and outputting the alarm sound from the speaker 4 (step S2). Thereafter, when the vertical swinging motion of the finger is detected by the recognition sensor 2 (Y in step S3), the control unit 5 controls the display unit 3 and the speaker 4 to stop the operations thereof based on the alarm function, thereby stopping the alarm (step S4).

According to the first embodiment, when the motion is detected by the recognition sensor 2 while the display unit 3 and the speaker 4 perform the alarm operation, the control unit 5 stops the alarm operation of the display unit 3 and the speaker 4. Thus, even when the hand or the finger is moved in the vicinity of the recognition sensor 2 while the alarm function is not executed, such the motion is not recognized as an operation, and hence an erroneous operation can be prevented.

Further, according to the first embodiment, the recognition sensor 2 is provided at the tip of the lever switch 6 attached to the steering column 8. Thus, as shown in Fig. 4, the operation can be performed without leaving the fingers from the steering 7.

In the first embodiment, although the display unit 3 is configured by the display, the invention is not limited thereto. For example, the display unit 3 may be configured by an alarm lamp.

### [Second Embodiment]

Next, the second embodiment of the invention will be explained. An electronic control apparatus 1 according to the second embodiment has the same configuration as the first embodiment shown in Fig. 1 and so the detailed explanation of this configuration will be omitted. The second embodiment largely differs from the first embodiment in the operation of the control unit 5. Next, the operation of the electronic control apparatus 1 according to the second embodiment will be explained with reference to a flowchart of Fig. 6.

First, the control unit 5 starts the processing in response to the turning-on of the ignition switch. When the generation of announcement (notification) information such that a maintenance implementation time comes soon is detected (Y in step S5), the control unit controls the display unit 3 and the speaker 4 to execute a notification function, thereby displaying the announcement information on the display unit 3 and outputting sound representing the announcement from the speaker 4 (step S6).

Thereafter, when the vertical swinging motion of the finger is detected by the recognition sensor 2 (Y in step S7), the control unit 5 controls the display unit 3 and the speaker 4 to stop the operations thereof based on the notification function, thereby stopping the announcement (step S8).

According to the second embodiment, when the motion is detected by the recognition sensor 2 while the display unit 3 and the speaker 4 perform the announcement, the control unit 5 stops the announcement operation of the display unit 3 and the speaker 4. Thus, even when the hand or the finger is moved in the vicinity of the recognition sensor 2 while the notification function is not executed, such the motion is not recognized as an operation, and hence an erroneous operation can be prevented.

In the first and second embodiments, although the explanation is made as to the alarm function and the notification function as specific functions, the invention is not limited thereto. Another function may be employed as the specific function.

### [Third Embodiment]

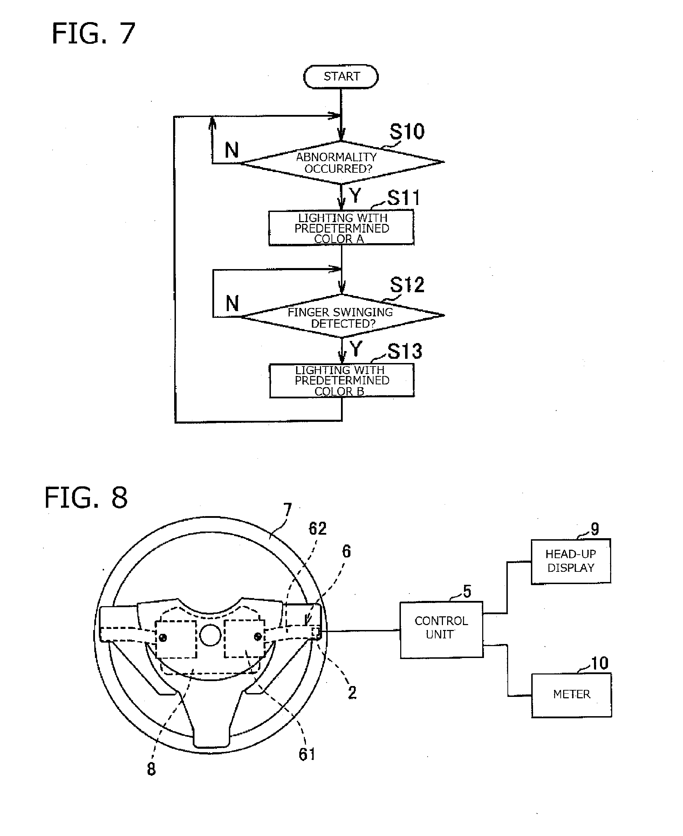

Next, the third embodiment of the invention will be explained. An electronic control apparatus 1 according to the third embodiment is configured in a manner that the control unit 5 is connected to an indoor illumination lamp (not shown) in place of the display unit 3 and the speaker 4 and can control the indoor illumination lamp. Other configuration of this embodiment is same as that of the first embodiment shown in Fig. 1 and so the detailed explanation of this configuration will be omitted. Next, the operation of the electronic control apparatus 1 according to the third embodiment will be explained with reference to a flowchart of Fig. 7.

First, the control unit 5 starts the processing in response to the turning-on of the ignition switch. When the occurrence of abnormality is detected (Y in step S10), the control unit controls the indoor illumination lamp to execute an alarm function. That is, the control unit 5 turns the indoor illumination lamp on in a predetermined color A (alarm color) such as red (step S11). Thereafter, when the vertical swinging motion of the finger is detected by the recognition sensor 2 (Y in step S12), the control unit 5 controls the indoor illumination lamp to stop the execution of the alarm function. Specifically, the control unit 5 stops the lighting of the indoor illumination lamp with the predetermined color A and switches the lighting color of the indoor illumination lamp into a predetermined color B such as blue or normal illumination color (step S13).

According to the third embodiment, when the motion is detected by the recognition sensor 2 while the indoor illumination lamp performs the alarm operation, the control unit 5 stops the alarm operation of the indoor illumination lamp with the predetermined color A, thereby stopping the alarm. Thus, like the first embodiment, even when the hand or the finger is moved in the vicinity of the recognition sensor 2 while the alarm function is not executed, such the motion is not recognized as an operation, and hence an erroneous operation can be prevented.

In the third embodiment, although the predetermined color A is switched into the predetermined color B when the finger swinging motion is detected, the invention is not limited thereto. For example, when the finger swinging motion is detected, the lighting of the predetermined color A may be stopped to thereby turn the indoor illumination lamp off.

### [Fourth Embodiment]

Next, the fourth embodiment of the invention will be explained with reference to Fig.8. In this figure, portions substantially identical to those explained in the first embodiment of Fig.1 are referred to by the common symbols, with detailed explanation thereof being omitted.

As shown in this figure, an electronic control apparatus 1 includes the recognition sensor 2, a head-up display 9 as an electronic device, a meter 10 as an electronic device, and the control unit 5 for controlling the head-up display 9 and the meter 10.

This recognition sensor 2 is same as that of the first embodiment, and hence the detailed explanation thereof will be omitted. The head-up display 9 is a device for displaying information on a reflection plate such as the windshield of an automobile. The meter 10 is provided within the instrument panel of the vehicle and has a display part. The head-up display 9 displays an image on the far side with respect to the display part of the meter 10 in the gazing direction of a driver. Like the first embodiment, the control unit 5 is configured by a microcomputer and connected to the head-up display 9 and the meter 10 to thereby control the head-up display 9 and the meter 10.

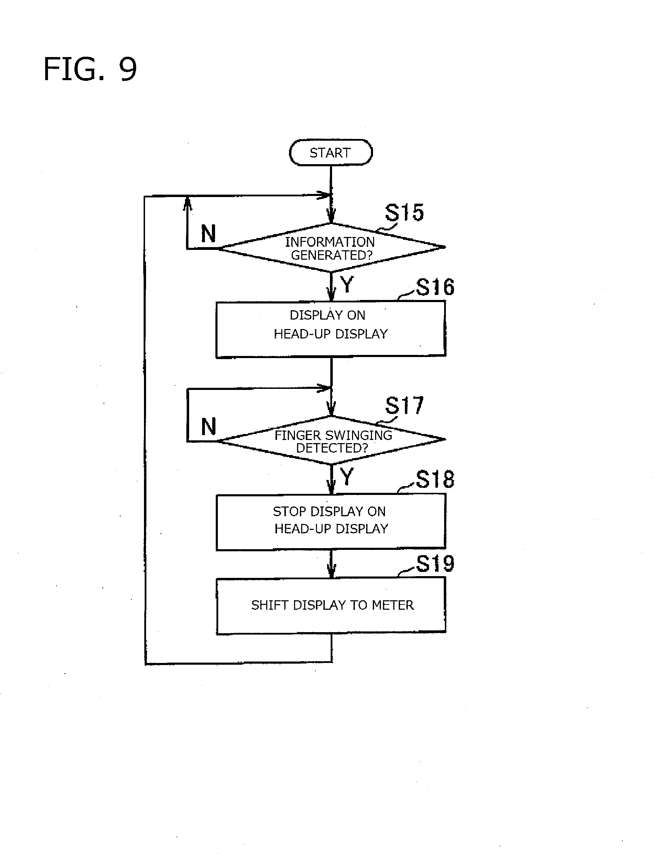

Next, the operation of this electronic control apparatus 1 will be explained with reference to Fig. 9. First, the control unit 5 starts the processing in response to the turning-on of the ignition switch. For example, when it is detected that information to be displayed on the head-up display 9 such as intersection information of a navigation system is generated (Y in step S15), the control unit displays the information on the head-up display 9 (step S16). When the swinging motion of the finger is detected by the recognition sensor 2 during this display operation (Y in step S17), the control unit stops the display on the head-up display 9 (step S18). Then, the control unit displays the display contents having been displayed on the head-up display 9, on the meter 10 in place of the head-up display (step S19).

According to the fourth embodiment, even when the hand or the finger is moved in the vicinity of the recognition sensor 2 while the head-up display 9 stops the display thereof, such the motion is not recognized as an operation, and hence an erroneous operation can be prevented.

In the fourth embodiment, although the information having been displayed on the head-up display 9 is shifted to the meter 10 when the finger is swung, the invention is not limited thereto. The display of the head-up display 9 may be merely stopped when the finger is swung.

Further, according to the respective embodiments, although the recognition sensor 2 is provided at the tip of the lever switch 6, the invention is not limited thereto. This sensor may be provided at another portion within the vehicle.

The aforesaid embodiments merely show representative modes of the invention and the invention is not limited thereto. That is, the invention can be implemented in various modified manners within a range not departing from the gist thereof.

The features of the embodiments of the electronic control apparatus according to the invention will be briefly summarized below as listed in [1] to [6].
[1] The electronic control apparatus 1 includes:
   a motion detection unit (recognition sensor 2) that detects motion of a hand or a finger; and
   the control unit 5 that controls the at least one electronic device (display unit 3, speaker 4, head-up display 9, meter 10), wherein
   the control unit stops execution of the specific function by the electronic device when the motion detection unit detects the motion while the electronic device executes the specific function.
[2] The electronic control apparatus described in [1], wherein
   the specific function is the alarm function or the notification function, and
   the control unit stops execution of the alarm function or the notification function by the electronic device when the motion detection unit detects the motion while the electronic device executes the alarm function or the notification function.
[3] The electronic control apparatus described in [2], wherein
   the specific function is a lighting function that the indoor illumination lamp constituting the electronic device is lit with the alarm color, and
   the control unit stops lighting of the indoor illumination lamp with the alarm color when the motion detection unit detects the motion while the indoor illumination lamp is lit with the alarm color.
[4] The electronic control apparatus described in [1], wherein
   the specific function is a display function that the head-up display constituting the electronic device performs the display operation, and
   the control unit stops the display operation of the head-up display when the motion detection unit detects the motion while the head-up display performs the display operation.
[5] The electronic control apparatus described in [4], wherein
   the control unit stops the display operation of the head-up display and displays, on another display unit other than the head-up display, display contents having been displayed on the head-up display.
[6] The electronic control apparatus described in one of [1] to [5], wherein
   the motion detection unit is provided at the tip of the lever switch attached to the steering column.

Although the invention is explained in detail and with reference to the particular embodiments, it will be apparent for those skilled in the art that various changes and modifications can be made without departing from the spirit and scope of the invention.

This application is based on Japanese Patent Application (Japanese Patent Application No. 2013-013973) filed on January 29, 2013, the content of which is incorporated herein by reference.

### Industrial Applicability

According to the electronic control apparatus of the invention, no response is performed with respect to the motion of the hand or the finger while the electronic device does not operate based on the specific function, and hence an erroneous operation can be prevented. The invention achieving such the effects is useful in the field relating to the electronic control apparatus for controlling electronic devices mounted in a vehicle.

### Reference Signs List

- 1: electronic control apparatus
- 2: recognition sensor (motion detection unit)
- 3: display unit (electronic device)
- 4: speaker (electronic device)
- 5: control unit
- 9: head-up display (electronic device)
- 10: meter (another display unit)

## Claims

1. An electronic control apparatus comprising:
a motion detection unit that detects motion of a hand or a finger; and
a control unit that controls at least one electronic device, wherein
the control unit stops execution of a specific function by the electronic device when the motion detection unit detects the motion while the electronic device executes the specific function.

2. The electronic control apparatus according to claim 1, wherein
the specific function is an alarm function or a notification function, and
the control unit stops execution of the alarm function or the notification function by the electronic device when the motion detection unit detects the motion while the electronic device executes the alarm function or the notification function.

3. The electronic control apparatus according to claim 2, wherein
the specific function is a lighting function that an indoor illumination lamp constituting the electronic device is lit with an alarm color, and
the control unit stops lighting of the indoor illumination lamp with the alarm color when the motion detection unit detects the motion while the indoor illumination lamp is lit with the alarm color.

4. The electronic control apparatus according to claim 1, wherein
the specific function is a display function that a head-up display constituting the electronic device performs a display operation, and
the control unit stops the display operation of the head-up display when the motion detection unit detects the motion while the head-up display performs the display operation.

5. The electronic control apparatus according to claim 4, wherein
the control unit stops the display operation of the head-up display and displays, on another display unit other than the head-up display, display contents having been displayed on the head-up display.

6. The electronic control apparatus according to one of claims 1 to 5, wherein
the motion detection unit is provided at a tip of a lever switch attached to a steering column.
